# EUROPÄISCHE PATENTANMELDUNG

(11) **EP 2 085 415 A1**
(43) Veröffentlichungstag der Anmeldung: **05.08.2009**
(21) Anmeldenummer: 08001553.0
(22) Anmeldetag: 28.01.2008
(51) Int. Cl.: C08G 59/02, C08G 59/30, C08L 63/00, C08L 81/04, E04D 5/10, E04D 7/00

(54) **Verbundsystem, Verfahren zur Herstellung desselben sowie mehrschichtiges Flächengebilde**

(71) Anmelder: Nestler, Karl, 97320 Sulzfeld (DE)
(72) Erfinder: Nestler, Karl, 97320 Sulzfeld (DE)
(74) Vertreter: Walcher, Armin

(57) **Zusammenfassung**

Die Erfindung betrifft ein Verbundsystem mit wenigstens drei Schichten, wobei das Verbundsystem eine Wärmedämmschicht II mit einer Oberseite und einer Unterseite aufweist, wobei oberseitig zur Wärmedämmschicht II wenigstens eine Abdichtungsschicht III und unterseitig zur Wärmedämmschicht II wenigstens eine Abdichtungsschicht I angeordnet ist und die Abdichtungsschicht I und III jeweils eine ausgehärtete Abdichtungsmasse umfassen, wobei die Abdichtungsmasse folgende Komponenten enthält:
A) mindestens ein epoxidfunktionelles Polysulfidharz,
B) mindestens ein Epoxydharz,
C) mindestens einen Härter, welcher bei Umgebungstemperatur reaktiv gegenüber Epoxydgruppen ist,
D) Füllstoffe, Hilfs- und/oder Zusatzmittel

wobei der Anteil an epoxidfunktionellem Polysulfid-Harz A) in einem Bereich von 25 - 80 Masse-%, bezogen auf die Gesamtmasse der Abdichtungsmasse, liegt. Die Erfindung betrifft ferner ein Verfahren zur Herstellung des Verbundsystemes sowie ein Flächengebilde.

## Beschreibung

Die vorliegende Erfindung betrifft ein Verbundsystem sowie ein Verfahren zur Herstellung desselben. Ferner betrifft die Erfindung ein mehrschichtiges Flächengebilde, das mit dem Verbundsystem versehen ist.

Zur Abdichtung von Gebäuden oder Gebäudeteilen, beispielsweise von Flachdächern, Terrassen, Balkonen, Parkdecks, etc., werden neben

Abdichtungsbahnen auch flüssig aufzubringende Beschichtungsmaterialien verwendet.

Flüssig aufzubringende Beschichtungsmaterialien ergeben nach Aushärtung eine naht- und fugenlose Abdichtung mit gleichmäßiger Dicke. Die Freiheit von Nähten und Fugen ist von großem Vorteil, da Nähte und Fugen häufig Ausgangspunkt für Undichtigkeiten sind. Beispielsweise müssen bei Verwendung von Kunststoffbahnen die Bahnen bei der Aufbringung durch Kleben oder Schweißen dauerhaft und dicht miteinander verbunden werden. Nachteiligerweise treten jedoch an den Nähten/Stössen bzw. Fugen insbesondere im Bereich von Anschlüssen und Durchdringungen teilweise bereits bei der Verklebung bzw.

Verschweißung der Bahnen miteinander bzw. teilweise erst nach einer gewissen Zeit Undichtigkeiten auf.

Diese Undichtigkeiten können dann zu einer Durchfeuchtung von Gebäuden oder Gebäudeteilen führen, wodurch erhebliche Schädigungen an den Gebäuden, den Gebäudeteilen oder Einrichtungen hervorgerufen werden können.

Insoweit besteht ein Bedarf an der Bereitstellung von Abdichtungsmaterialien, die zuverlässig Gebäude bzw. Gebäudeteile gegenüber Feuchtigkeit in flüssiger und dampfförmiger Form abdichten, die in der Handhabung einfach und zuverlässig sowie vorzugsweise in arbeits- und umwelttechnischer Hinsicht weitgehend unbedenklich sind.

Aus der US 5,447,798 ist ein beschichteter Gegenstand aus Beton bekannt, der eine Mischschicht aus Beton und Polysulfid-modifiziertem Epoxidharz sowie eine Schicht aus gehärtetem Polysulfid-modifiziertem Epoxidharz aufweist. Das Polysulfid-modifizierte Epoxidharz wird unter Zentrifugation auf den noch nicht ausgehärteten Betongegenstand aufgebracht, wodurch sich die gewünschte Mischschicht aus Beton und Polysulfid-modifiziertem Epoxidharz ausbildet. Nachfolgend wird auf die Mischschicht sodann eine Schicht aus Polysulfid-modifiziertem Epoxidharz aufgebracht. Das Polysulfid-modifizierte Epoxidharz wird dabei vor der Aufbringung in organischem Lösemittel gelöst.

Nachteilig ist bei der Vorgehensweise gemäß der Lehre der US 5,447,798, dass in organischem Lösemittel gelöstes Polysulfid-modifiziertes Epoxidharz verwendet wird, da dies eine Belastung für Mensch und Umwelt darstellt. Weiterhin ist nachteilig, dass das Beschichtungsmittel zwingend auf einen noch nicht ausgehärteten Beton unter Zentrifugation aufgebracht werden muss, so dass sich die erforderliche Mischschicht aus Beton und Polysulfid-modifiziertem Epoxidharz ausbilden kann. Eine Beschichtung von ausgehärtetem Beton, beispielsweise eines undicht gewordenen Parkdecks oder Flachdaches, ist mithin nicht möglich, da sich in diesem Fall nicht die erforderliche Mischschicht ausbilden kann.

Aus der US 5,320,871 ist eine Beschichtungszusammensetzung bekannt, die dem Schutz von Stahlkonstruktionen oder ähnlichem gegenüber Korrosion dient, wenn diese unter Wasser angeordnet sind.

Aus der EP 0 693 512 A1 ist ein lösemittelfreier Zweikomponenten-Polyurethan-Beschichtungsstoff bekannt, der in flüssiger Form zur Dachabdichtung oder Betonsanierung verwendet werden kann. Es hat sich jedoch gezeigt, dass diese Polyurethan-Beschichtungsmaterialien nur unzureichende mechanische Eigenschaften, insbesondere eine unzureichende Durchstoßfestigkeit, aufweisen und mithin nur sehr eingeschränkt verwendet werden können. Gute mechanische Eigenschaften sind insbesondere bei Dachabdichtungen erwünscht, damit beispielsweise ein Flachdach nach Aufbringung der Beschichtung belastet werden kann, z.B. durch Betreten oder Aufstellen von Gartenmöbeln, wenn das Flachdach auch als Dachterrasse benutzt wird. Ferner ist nachteilig, dass die Beschichtungsmaterialien vor der Aushärtung selbst sehr feuchtigkeitsempfindlich und mithin bei der Verarbeitung insoweit sehr problematisch sind.

Aus der US 5,914,172 sind des Weiteren bitumen- und polysulfidhaltige Beschichtungsmaterialien bekannt, die jedoch ebenfalls nur eine unzureichende Durchstoßfestigkeit aufweisen

Aufgabe der Erfindung ist es, ein Verbundsystem bereitzustellen, das einerseits einen guten Schutz gegenüber Feuchtigkeit und Wasserdampf einschließlich einer guten Wärmedämmung bietet und zum anderen in gesundheitstechnischer Hinsicht während der Aufbringung weniger bedenklich ist, als die zur Zeit auf dem Markt verwendeten Abdichtungsmaterialen. Insbesondere ist es wünschenswert, ein Verbundsystem bereitzustellen, das über verbesserte mechanische Eigenschaften, insbesondere einer verbesserten Durchstoßfestigkeit, verfügt, so dass bei äußerer mechanischer Belastung des Verbundsystems, beispielsweise beim Betreten oder bei punktförmiger Belastung der Oberseite, in keiner Schicht des Verbundsystems eine Undichtigkeit auftritt.

Ferner ist es erwünscht, ein Verbundsystem bereitzustellen, das bei der Sanierung von Gebäuden und Gebäudeteilen verwendet werden kann, also beispielsweise direkt auf ausgehärtetem Beton aufgebracht werden kann, ohne dass dabei eine Mischschicht aus Beton und Abdichtungsmittel erforderlich ist.

Die der Erfindung zugrundeliegende Aufgabe wird durch Bereitstellung eines Verbundsystems mit wenigstens drei Schichten gelöst, wobei das Verbundsystem eine Wärmedämmschicht II mit einer Oberseite bzw. Außenseite und einer Unterseite bzw. Innenseite aufweist, wobei oberseitig zur Wärmedämmschicht II wenigstens eine Abdichtungsschicht III und unterseitig zur Wärmedämmschicht II wenigstens eine Abdichtungsschicht I angeordnet ist und die Abdichtungsschicht I und III jeweils eine ausgehärtete Abdichtungsmasse umfassen, wobei die Abdichtungsmasse folgende Komponenten enthält:
A) mindestens ein epoxidfunktionelles Polysulfidharz,
B) mindestens ein Epoxidharz,
C) mindestens einen Härter, welcher bei Umgebungstemperatur reaktiv gegenüber Epoxidgruppen ist,
D) Füllstoffe, Hilfs- und/oder Zusatzmittel
wobei der Anteil an epoxidfunktionellem Polysulfid-Harz A) in einem Bereich von 25 - 80 Masse-%, bezogen auf die Gesamtmasse der Abdichtungsmasse, liegt.

Bevorzugte Weiterbildungen des Erfindungsgegenstandes sind in den Unteransprüchen 2 bis 21 angegeben.

Unter Verbundsystem wird erfindungsgemäß ein Schichtenverbund verstanden. Der Schichtenverbund umfasst dabei mehrere, vorzugsweise unmittelbare, aufeinanderfolgende Schichten. Die Abdichtungsschichten I und III werden vorzugsweise jeweils flüssig aufgebracht.

Das Epoxidäquivalentgewicht des epoxidfunktionellen Polysulfidharzes liegt vorzugsweise in einem Bereich von 300 bis 3500 g/eqiv, vorzugsweise 350 bis 1500 g/eqiv, weiter bevorzugt 400 bis 1000 g/eqiv., wobei sich die Angabe auf die reinen epoxidfunktionellen Polysulfidharze bezieht, d.h. ohne den Überschuss Epoxidharz, der bei den aromatischen Typen zwangsläufig enthalten ist.

Die Viskosität des epoxidfunktionellen Polysulfidharzes bei 20°C liegt vorzugsweise in einem Bereich von 1 bis 150 Pa·s, weiter bevorzugt von 1 bis 20 Pa·s, besonders bevorzugt von 1 bis 3 Pa·s. Die Viskosität wird dabei rotationsviskosimetrisch bestimmt.

Der Schwefelgehalt des epoxidfunktionellen Polysulfidharzes liegt vorzugsweise in einem Bereich von 30 bis 50 Masse-%, weiter bevorzugt von 35 bis 40 Masse-%.

Das als Komponente B) zu verwendende mindestens eine Epoxidharz ist insbesondere ein nicht modifiziertes Epoxidharz.

Es hat sich überraschend herausgestellt, dass sich eine Abdichtungsmasse, die neben Epoxidharzen ein epoxidfunktionelles Polysulfid-Harz oder ein Gemisch von verschiedenen epoxidfunktionellen Polysulfid-Harzen in einem Bereich von 25
- 80 Masse-% enthält, hervorragend eignet, um eine Abdichtungsschicht, die sowohl als Wasserdampfsperrschicht als auch als Außenabdichtung geeignet ist, herzustellen.

Bei der vorliegenden Erfindung werden die Begriffe Abdichtungsschicht I und Wasserdampfsperrschicht austauschbar verwendet. Ebenfalls werden bei der vorliegenden Erfindung die Begriffe Außenabdichtung und Abdichtungsschicht III austauschbar verwendet.

Eine unter Verwendung der erfindungsgemäß zu verwendenden Abdichtungsmasse hergestellte Wasserdampfsperrschicht bzw. Abdichtungsschicht I weist überraschenderweise eine Wasserdampf-Diffusionswiderstandszahl µ von wenigstens 15000, weiter bevorzugt von wenigstens 30000, auf. Ferner kann diese Wasserdampfsperrschicht bzw.

Abdichtungsschicht I auf einfache und umweltfreundliche Weise aufgebracht werden.

Die Wasserdampf-Diffusionswiderstandszahl µ, die auch als Wasserdampf-Diffusionswiderstandsfaktor bezeichnet wird, ist eine dimensionslose Zahl, die angibt, um wie viel größer der Widerstand eines Baustoffes gegenüber diffundierendem Wasserdampf ist, verglichen mit dem Widerstand der Luft bei gleicher Temperatur. Je höher die Wasserdampf-Diffusionswiderstandszahl µ ist, desto stärker wird die Dampfdiffusion eingeschränkt bzw. behindert. Bei einer Wasserdampf-Dampfwiderstandszahl µ im Bereich von 50 - 500 wird die Dampfdiffusion nur wenig eingeschränkt. Bei µ-Werten von 500 bis 15000 nimmt die Behinderung der Wasserdampfdiffusion stark zu. Ab einem µ-Wert von 15.000 kann ein Material als weitgehend wasserdampfsperrend und ab einem µ-Wert von 100.000 als wasserdampfsperrend bezeichnet werden. Als absolut wasserdampfdicht werden unter anderem Metalle und Glas - beide porenfrei - bezeichnet. Im Baubereich wird die Effizienz einer Wasserdampfsperre durch die diffusionsäquivalente Luftschichtdicke s_{d} einer Bauteilschicht charakterisiert, die sich aus der materialspezifischen Wasserdampf-Diffusionswiderstandszahl µ multipliziert mit der Dicke d (in m) des Werkstoffes errechnet. Gemäß dem Merkblatt ,Wärmeschutz bei Dach und Wand' des Zentralverbandes des Deutschen Dachdeckerhandwerks ist bei s_{d} ≥ 100 m der Dampfsperre ein Schutz gegen Tauwasserbildung gegeben.

Überraschenderweise weisen die mit epoxidfunktionellen Polysulfidharzen modifizierten Epoxidharz-Polymere eine deutlich geringere Wasserdampfdurchlässigkeit auf im Vergleich zu nicht-modifizierten Epoxidharz-Polymeren mit einem µ-Wert im Bereich von etwa 100 bis 900.

Eine Wasserdampfsperrschicht wird üblicherweise bei der Wärmedämmung von Gebäuden oder Gebäudeteilen zwischen dem zu dämmenden Bauteil, beispielsweise einer Betonwand oder einer Betondecke auf deren Außenseite und unterhalb bzw. innerhalb der Wärmedämmschicht angeordnet, d.h. zwischen Bauteil und Wärmedämmung. Die Wasserdampfsperrschicht verhindert mithin, dass Wasserdampf aus dem zu dämmenden Bauteil in die Wärmedämmung eindiffundiert und dort kondensiert und flüssig ausfällt. Flüssiges Wasser in dem Wärmedämmmaterial führt zu einer Verminderung des Wärmedämmwirkung und kann zu Schimmelbefall an der Innenseite des Bauteiles kommen, was gesundheitliche Probleme bei sich in dem Gebäudeteil aufhaltenden Personen verursachen kann.

Nach Aufbringung der Abdichtungsschicht I ist erfindungsgemäß entweder eine Zwischenschicht, beispielsweise ein Haftschicht, und nachfolgend die Wärmedämmschicht II oder direkt die Wärmedämmschicht II angeordnet.

Die Wärmedämmschicht II kann dabei jedes üblicherweise zur Wärmedämmung verwendete Wärmedämmmaterial umfassen wie beispielsweise Mineralfasern, beispielsweise Steinwolle, Glasfasern, Holzfasern, Kunststoffschäume, z.B. Polyurethan, Polystyrol, etc., Blähton, Schaumglas, etc. oder Gemische davon.

Das Wärmedämmmaterial liegt üblicherweise in platten- oder mattenartiger Form vor, beispielsweise als Fasermatten, Faserplatten, Kunststoffschaumplatten, etc.

Die Wärmedämmschicht II ist gemäß einer bevorzugten Weiterbildung der Erfindung direkt auf der Abdichtungsschicht I bzw. der Wasserdampfsperrschicht angeordnet. Bei der Herstellung dieser Ausführungsvariante wird die Wärmedämmschicht II unmittelbar nach Aufbringung der Abdichtungsschicht I angeordnet, so dass die Wärmedämmschicht II mit der noch nicht ausgehärteten Abdichtungsschicht I in Kontakt kommt. Das Material der Abdichtungsschicht I weist nach Aushärtung eine sehr gute Haftung zu dem Material der Wärmedämmung auf, so dass die Wärmedämmschicht II nach Aushärtung der Abdichtungsschicht I unmittelbar und dauerhaft mit der Abdichtungsschicht I verbunden ist. Selbstverständlich kann aber auch zusätzlich eine weitere Zwischenschicht in Form einer Haftschicht zwischen Abdichtungsschicht I und Wärmedämmschicht II angeordnet werden.

Sollte die Abdichtungsschicht I schon ausgehärtet sein, so kann eine zusätzliche Haftschicht erforderlich sein, um Abdichtungsschicht I und Wärmedämmschicht II miteinander zu verbinden bzw. zu verkleben. Vorzugsweise wird in diesem Fall erneut die Abdichtungsmasse als Haftmittel aufgebracht, um das Wärmedämmmaterial mit der bereits ausgehärteten Abdichtungsschicht I, vorzugsweise vollflächig, zu verkleben.

Auf der Wärmedämmschicht II ist erfindungsgemäß entweder eine Zwischenschicht, beispielsweise ein Haftschicht, und nachfolgend die Abdichtungsschicht III oder direkt die Abdichtungsschicht III angeordnet.

Die Abdichtungsschicht III bzw. die Außenabdichtung dient der Abdichtung des erfindungsgemäßen Verbundsystems gegenüber der natürlichen Bewitterung mit Regen, Schnee, Sonneneinstrahlung und hohen sowie tiefen Temperaturen. Die Abdichtungsschicht III verhindert mithin das Eindringen von Feuchtigkeit in flüssiger und dampfförmiger Form in das erfindungsgemäße Verbundsystem.

Im Falle eines Daches, beispielsweise eines Flachdaches, Pultdaches oder Giebeldaches, kann die Außenabdichtung auch als Dachabdichtung bezeichnet werden. Im Falle einer Außenwand kann die Außenabdichtung auch als Wandabdichtung bezeichnet werden.

Die Abdichtungsschicht III weist dabei die gleiche grundsätzliche Zusammensetzung auf wie die Abdichtungsschicht I. Die Abdichtungsschicht III kann aber auch innerhalb der angegebenen Definition eine von der Abdichtungsschicht I verschiedene Zusammensetzung aufweisen. Vorzugsweise ist die Zusammensetzung der Abdichtungsschicht I und III identisch, da hierdurch die Herstellung des erfindungsgemäßen Verbundsystems einfacher und kostengünstiger ist.

Es hat sich völlig überraschend herausgestellt, dass die Abdichtungsmasse sowohl zur Herstellung der Abdichtungsschicht I bzw. einer Wasserdampfsperrschicht als auch zur Herstellung der Abdichtungsschicht III bzw. einer Außenabdichtung verwendet werden kann.

Eine Wasserdampfsperrschicht muss, wie bereits obenstehend ausgeführt, eine Wasserdampfdiffusion in das Wärmedämmmaterial soweit verhindern, dass keine Wasserdampfkondensation innerhalb der Wärmedämmung erfolgt.

Eine Außenabdichtung muss zum einen einen sehr großen Widerstand gegen Witterungsangriffe, d.h. eine geringe Änderung der Materialeigenschaften infolge Langzeitbelastung durch Regen, Sonneneinstrahlung, hohe und tiefe Temperaturen, etc., und zum anderen besondere mechanische Eigenschaften aufweisen. Die besonderen -mechanischen Eigenschaften sind erforderlich, damit die Außenabdichtung mechanisch belastbar ist. So muss die Außenabdichtung im Falle einer Dachabdichtung trittfest sein, damit sie beispielsweise von einem Schornsteinfeger oder zu Wartungsarbeiten begangen werden kann. Wenn das Dach beispielsweise ein Flachdach ist, wird es häufig als Dachterrasse genutzt, was eine außerordentliche mechanische Stabilität, insbesondere Durchstoßfestigkeit, erfordert, damit Stühle oder Tische aufgrund der punktuellen Belastung zu keiner Beschädigung der Dachabdichtung führen.

Die bei der Herstellung des erfindungsgemäßen Verbundsystems verwendete Abdichtungsmasse vereinigt nach Aufbringung als Beschichtung und Aushärtung überraschenderweise die sowohl für eine Dampfsperrschicht als auch für eine Außenabdichtung erforderlichen Eigenschaften.

Äußerst vorteilhaft kann die erfindungsgemäß zu verwendende Abdichtungsmasse direkt, d.h. ohne Anordnung einer weiteren Zwischenschicht, auf ein Flächengebilde wie die Oberfläche eines Bauteiles, das aus üblichen Materialien bestehen bzw. diese umfassen kann, aufgebracht werden. Das Baueil kann beispielsweise Materialien enthalten, wie Beton, Mauerstein, Holz, Metall, Stahl, Kunststoff, Bitumen oder Kombinationen davon.

Gemäß einer weiteren bevorzugten Variante der Erfindung liegt der Anteil an epoxidfunktionellem Polysulfid-Harz A) bei mindestens 25 Masse-%, vorzugsweise bei 30 - 75 Masse-%, besonders bevorzugt bei 35 - 60 Masse-%, jeweils bezogen auf die Gesamtmasse der Abdichtungsmasse.

Die gemäß der vorliegenden Erfindung zu verwendende Abdichtungsmasse bildet aufgrund des hohen Anteils von epoxidfunktionellem Polysulfid-Harz A) eine zuverlässige Wasserdampfsperrschicht bei ausreichender Dicke auf einer Vielzahl von Substraten aus, ohne dass eine Grundierung oder Primer erforderlich ist.

Darüber hinaus sind die Abdichtungsschichten I und III aufgrund des hohen Anteils an epoxidfunktionellen Polysulfid-Harz(en) A) witterungsbeständig und weisen ein hervorragendes elastisches Verhalten auf, so dass es auch bei Vibration oder Fugenbewegung nicht zu einer Beschädigung der aufgebrachten Abdichtungsschicht I und III kommt. Die ausgezeichnete Dehnfähigkeit-der beiden Abdichtungsschichten bei unterschiedlichen Temperaturen, beispielsweise in einem Bereich von -20°C bis +40°C, und die hervorragenden elastischen Eigenschaften der Abdichtungsschichten I und III über einen langen Zeitraum sind auf die hervorragende Alterungsbeständigkeit derselben zurückzuführen.

Ein weiterer Vorteil ist die hohe Beständigkeit der Abdichtungsschicht I und III gegenüber thermischen und chemischen Beanspruchungen. Insbesondere bei Gebäudeteilen, wie Außenwänden und Dächern, die während der Sommermonate einer intensiven Sonneneinstrahlung ausgesetzt sind, ist die sehr gute thermische Beständigkeit als auch Beständigkeit gegenüber UV-Licht von großem Vorteil.

Gemäß einer Weiterbildung der Erfindung können die epoxidfunktionellen Polysulfid-Harze A) rein aliphatisch, rein aromatisch oder aber sowohl aromatisch als auch aliphatisch sein. Ferner können selbstverständlich Mischungen aus verschiedenen aliphatischen epoxidfunktionellen Polysulfid-Harzen bzw. Mischungen von verschiedenen aromatischen epoxidfunktionellen Polysulfid-Harzen als auch Mischungen von aromatischen und aliphatischen epoxidfunktionellen Polysulfid-Harzen verwendet werden.

Aliphatische epoxidfunktionelle Polysulfid-Harze können durch Umsetzung von thiolfunktionellen Polysulfiden mit Epichlorhydrin hergestellt werden, wie beispielsweise in der WO 03/099908 A1 oder der WO 03/076487 A1 offenbart, deren Offenbarungsgehalt hiermit unter Bezugnahme aufgenommen wird. Des weiteren ist auf die WO 2004/099283 A1 und die WO 2006/037442 A1 zu verweisen, in denen ebenfalls die Herstellung von epoxidfunktionellen Polysulfid-Harzen beschrieben ist und deren Offenbarung hiermit ebenfalls unter Bezugnahme aufgenommen ist.

Aromatische epoxidfunktionelle Polysulfid-Harze können durch Umsetzung von thiolfunktionellen Polysulfiden mit einer überschüssigen Menge an aromatischen Epoxidharzen, die beispielsweise durch Umsetzung von Epichlorhydrin mit Bisphenol, vorzugsweise Bisphenol A und/oder Bisphenol F, erhalten werden, hergestellt werden. Derartige Epoxidharze enthalten prinzipiell nennenswerte Mengen an unmodifizierten Epoxidharzen, wobei der Anteil an unmodifiziertem Epoxidharz typischerweise bei 25 bis 60 Gew,-% bezogen auf das Gesamtgewicht epoxidfunktioneller Komponenten beträgt. Im Rahmen der vorliegenden Erfindung hat sich gezeigt, dass bei Einsatz der aromatischen epoxidfunktionellen Polysulfidharze neben einer gesteigerten Reaktivität auch eine verbesserte Frühwasserbeständigkeit sowie eine verbesserte mechanische Festigkeit einer Beschichtung im Vergleich zu den aliphatischen epoxidfunktionellen Polysulfidharzen erzielt werden kann. Unter Frühwasserbeständigkeit wird verstanden, dass sich auch in Gegenwart von Wasser, beispielsweise von unmittelbar nach Aufbringung der Abdichtungsmasse darauf auftreffendem Regen, sich eine qualitativ hochwertige Abdichtung und Wasserdampfsperrschicht ausbildet.

Als sehr geeignet haben sich hierbei EPS 15, EPS 25, EPS 70 und/oder EPS 350 erwiesen, die bei der Firma Thioplast Chemicals GmbH & Co. KG in 07973 Greiz, Deutschland, erhältlich sind.

Als Epoxidharz-Komponente B) können aliphatische, cycloaliphatische oder aromatische Epoxidharze verwendet werden. Vorzugsweise enthalten die Epoxidharze im Durchschnitt mehr als eine Epoxidgruppe pro Molekül, vorzugsweise wenigstens zwei, drei oder vier Epoxidgruppen pro Epoxidharzmolekül.

Beispiele für geeignete Epoxidharze B) sind Glycidylether von mehrwertigen Alkoholen wie beispielsweise Butandiol, Hexandiol, Glycerin, hydriertem Diphenylolpropan, von mehrwertigen Phenolen wie z. B. von Resorcin, Diphenylolpropan, Diphenylolmethan (Bisphenol F), 2,2- Bis-(p-hydroxyphenyl) propan (Bisphenol A) oder von Phenol-Aldehyd-Kondensaten. Es können aber auch Glycidylester mehrwertiger Carbonsäuren, wie beispielsweise Hexahydrophthalsäure oder dimerisierte Fettsäure verwendet werden.

Äußerst bevorzugt werden als Komponente B) aromatische Flüssigepoxidharze, die aus Epichlorhydrin und Bisphenol A und/oder Bisphenol F hergestellt sind und ein Molekulargewicht von 150 bis 450 g/mol aufweisen, verwendet.

Falls die Viskosität der erfindungsgemäß zu verwendenden Abdichtungsmasse abgesenkt werden soll, kann die Komponente B) monofunktionelle Epoxidverbindungen enthalten, wodurch die Verarbeitbarkeit der Abdichtungsmasse verbessert wird. Beispielsweise können aliphatische und/oder aromatische Glycidylether, wie beispielsweise Butylglycidylether, Phenylglycidylether oder Glycidylester, beispielsweise Monocarbonsäureglycidylester, verwendet werden. Selbstverständlich können auch andere Epoxide, wie beispielsweise Styroloxid (Phenylethylenoxid) oder 1,2-Epoxidodecan verwendet werden.

Als besonders geeignet haben sich als Epoxidharzkomponente B) Mischungen von FlüssigEpoxidharzen auf Basis von Bisphenol A und/oder Bisphenol F mit aliphatischen Glycidyletherverbindungen erwiesen.

Insbesondere bei Einsatz von aliphatischen epoxidfunktionellen Polysulfid-Harzen als Komponente A) ist es erfindungsgemäß bevorzugt, diese aliphatischen epoxidfunktionellen Polysulfid-Harze A) in Kombination mit aromatischen Epoxidharzen als Komponente B) zu verwenden.

Im Rahmen der vorliegenden Erfindung wurde die Beobachtung gemacht, dass nur bei einem entsprechend großen Anteil an Komponente A) in der für die Abdichtungsschicht I und III zu verwendende Abdichtungsmasse Beschichtungen mit hinreichend geringer Wasserdampfdurchlässigkeit und hervorragender mechanischer Stabilität resultieren. Deshalb ist es erfindungswesentlich, dass der Anteil an der Komponente A) in der Abdichtungsmasse mindestens 25 Masse-%, bezogen auf das Gesamtgewicht der Abdichtungsmasse beträgt, vorzugsweise von 30 - 75 Masse-%, besonders bevorzugt von 35 - 60 Masse-%.

Der Anteil an der Komponente B) in der für die Abdichtungsschicht I und III zu verwendende Abdichtungsmasse beträgt maximal 30 Masse-% bezogen auf das Gesamtgewicht der Abdichtungsmasse, vorzugsweise von 5 - 25 Masse-%, besonders bevorzugt von 10 - 20 Masse-%.

Erfindungsgemäß enthält die für die Abdichtungsschicht I und III zu verwendende Abdichtungsmasse wenigstens einen Härter als Komponente C). Die in der erfindungsgemäß zu verwendenden Abdichtungsmasse als Komponente C) vorzugsweise einzusetzenden Härtergemische sind aromatische oder aliphatische Polyamine, die mindestens zwei primäre Aminogruppen pro Molekül aufweisen und vorzugsweise ein (mittleres) Molekulargewichts Mₙ von 60 bis 500 besitzen. Geeignet sind insbesondere aliphatische Amine wie beispielsweise Ethylendiamin, 1,2- und 1,3- Diaminopropan, 1,4-Diaminobutan, 1,6-Diaminohexan, 2,2,4- und/oder 2,4,4-Trimethylhexamethylendiamin, die isomeren Xylylendiamine oder auch solche Polyamine, die neben mindestens zwei primären Aminogruppen noch sekundäre Aminogruppen aufweisen wie beispielsweise Diethylentriamin oder Triethylentetramin.

Besonders bevorzugt werden cycloaliphatische oder araliphatische Diamine, des genannten Molekulargewichtsbereichs eingesetzt, die einen oder mehrere cycloaliphatische oder aromatische Ringe aufweisen. Hierzu gehören beispielsweise meta-Xylylendiamin, 1,4-Diaminocyclohexan, 4,4'-Diaminodicyclo-hexylmethan, 1,3 - Diaminocyclopentan, 4,4'-Diaminodicyclohexylsulfon, 4,4'- Diamino-dicyclohexyl-propan- 1,3, 4,4'-Diamino-dicyclohexyl-propan-2,2, 3,3'-Dimethyl-4,4'diaminodicyclohexylmethan, 3-Aminomethyl-3,3, 5-trimethylcyclohexylamin (Isophorondiamin) oder technisches Bis-aminomethyl-tricyclodecan.
Ebenfalls einsetzbar als Komponente C) sind Addukte, die durch Umsetzung eines Überschusses der genannten Polyamine mit Epoxidharzen der vorstehend genannten Art hergestellt werden.

Weiterhin einsetzbar als Komponente C) sind Polyetheramine, die durch Umsetzung von Polyetherpolyolen mit Ammoniak hergestellt werden und beispielsweise von der Fa. Huntsman LLC, Belgien unter dem Handelsnamen Jeffamin^{®} vertrieben werden. Selbstverständlich ist es auch möglich Gemische der genannten Polyamine als Komponente C) einzusetzen.

Der Anteil an der Komponente C) in der für die Abdichtungsschicht I und III zu verwendende Abdichtungsmasse wird im Allgemeinen so bemessen, dass pro Epoxidgruppe der Komponenten A) und B) 0,4 bis 0,9, vorzugsweise 0,5 bis 0,8 primäre Aminogruppen der Komponente C) in der Abdichtungsmasse enthalten sind.

Der Fachmann kann die Menge an zuzusetzendem Härter bzw. Härtergemisch in Abhängigkeit von den äußeren Reaktionsbedingungen, wie beispielsweise Umgebungstemperatur, oder der gewünschten Aushärtungszeit einstellen und durch einige Versuche selbst ermitteln.

In der erfindungsgemäß zu verwendenden Abdichtungsmasse werden als Komponente D) die aus der Beschichtungstechnologie prinzipiell bekannten Füllstoffe, Hilfs- und/oder Zusatzmittel eingesetzt.

Als geeignete Füllstoffe seien beispielsweise Gesteinsmehl, Kaolin, Talkum oder Schwerspat genannt. Bevorzugt einzusetzen sind insbesondere plättchenförmige Füllstoffe wie Schichtsilikate, Magnesiumhydroxid oder Talkum. Als Zusatzmittel seien genannt: Mattierungsmittel wie Kieselsäure, Flammschutzmittel wie insbesondere Aluminiumhydroxid, Pigmente wie beispielsweise Titandioxid, Eisenoxid, Kreide oder Ruß, Viskositätsregulatoren wie beispielsweise Benzylalkohol oder Ethanol sowie Weichmacher wie Kohlenwasserstoffharze oder Phthalsäureester, wobei deren Mitverwendung keineswegs bevorzugt ist. Als weiteres Zusatzmittel sei Gummimehl genannt, bevorzugt Gummimehl auf Basis von Butylkautschuk.

Als weitere Hilfsmittel seien insbesondere Haftvermittler, wie beispielsweise funktionelle Silane, Entlüftungsmittel und Verlaufshilfsmittel sowie Reaktionsbeschleuniger wie z.B. Salicylsäure, Bis-(dimethylamino methyl)-phenol oder Tris-(dimethylaminomethyl)-phenol genannt.

Zur Erzielung spezieller Eigenschafen kann die Komponente D) flüssige Polysulfidpolymere mit Thiol-Endgruppen sowie gegebenenfalls Katalysatoren, der aus der Polysulfidchemie bekannten Art, wie beispielsweise Mangan (IV)-Oxid oder Peroxidkatalysatoren wie z.B. Calciumperoxid, Cumolhydroperoxid oder Natriumperborat enthalten. Im Rahmen der vorliegenden Erfindung wurde die Beobachtung gemacht, dass der Zusatz derartiger thiolfunktioneller Polysulfidpolymere die Wasserdampfdurchlässigkeit zusätzlich vermindert.

Der Anteil an der Komponente D) in der Abdichtungsmasse kann bis zu 60 Masse-% bezogen auf das Gesamtgewicht der Abdichtungsmasse betragen, vorzugsweise von 10 bis 50 Masse-%.

Der genaue Anteil sowie die genaue Art an zuzusetzenden Füllstoffen bzw. Additiven kann in Abhängigkeit von der speziellen Anwendung eingestellt werden.

Gemäß einer Weiterbildung der Erfindung enthält die Abdichtungsmasse weniger als 10 Masse-%, vorzugsweise weniger als 5 Masse-%, weiter bevorzugt weniger als 1 Masse-%, organisches Lösemittel, jeweils bezogen auf die Gesamtmasse der Abdichtungsmasse. Gemäß einer äußerst bevorzugten Weiterbildung der Erfindung ist die bei der Herstellung des erfindungsgemäßen Verbundsystems zu verwendende Abdichtungsmasse lösemittelfrei.

Vorteilhafterweise sind die verwendeten epoxidfunktionellen Polysulfidharze A) sowie verwendendeten Epoxidharze B) so niedrigviskos, dass der Zusatz von organischem Lösemittel nicht erforderlich ist. Dies ist in gesundheitlicher sowie anwendungstechnischer und arbeitssicherheitstechnischer Hinsicht ein großer Fortschritt, da sowohl Mensch als auch Umwelt weniger stark belastet werden als dies bei lösemittelhaltigen Beschichtungszusammensetzungen der Fall ist.

Gemäß einer bevorzugten Variante der Erfindung ist die Abdichtungsmasse in einem Temperaturenbereich von 10 bis 30°C, weiter bevorzugt von 5 bis 40°C, gießfähig oder fließfähig und besitzt selbstverlaufende Eigenschaften. Die erfindungsgemäß zu verwendende Abdichtungsmasse kann mithin sowohl bei niedrigen als auch bei hohen Temperaturen, auch im Außenbereich, sehr gut verarbeitet bzw. verwendet werden.

Gemäß einer weiteren Ausbildungsform der vorliegenden Erfindung weist die nicht ausgehärtete Abdichtungsmasse bei einer Temperatur von 23°C eine Viskosität von 2.000 mPa·s bis 25.000 mPa·s, vorzugsweise von 3.000 mPa·s bis 20.000 mPa·s, weiter vorzugsweise von 5.000 mPa·s bis 15.000 mPa·s, auf, wobei die Viskosität rotationsviskosimetrisch bestimmt wird.

Bei Aufbringung der Abdichtungsmasse zur Herstellung der Abdichtungsschicht I und/oder III auf einem Flachdach, das auch eine leichte Neigung von 10 bis 20° haben kann, wie dies beispielsweise bei Pultdächern der Fall ist, wird die Viskosität mit zunehmender Neigung höher eingestellt, so dass die Abdichtungsmasse beispielsweise auf dem Flachdach oder Pultdach durch Spritzen, Streichen, Rollen oder Rakeln aufgebracht und verteilt werden kann.

Wenn die Neigung der zu beschichtenden Fläche größer wird, kann der Anteil an Füllstoffen oder viskositätserhöhenden Additiven vergrößert werden, so dass die Abdichtungsmasse insgesamt eine höhere Viskosität aufweist und dadurch in einem etwas geringeren Maße fließfähig ist. Diese Abdichtungsmasse kann gleichwohl noch durch Streichen, Rollen, Rakeln oder Spachteln aufgebracht werden. Wenn die Abdichtungsmasse beispielsweise an einer Außenwand aufgebracht wird, ist es zweckmäßig, dass die Abdichtungsmasse beispielsweise ein Thixotropiermittel enthält, so dass die thixotrope Abdichtungsmasse durch Streichen, Rollen, Rakeln oder Spachteln aufgebracht werden kann, ohne vor der Aushärtung abzufließen.

Äußerst bevorzugt weist die erfindungsgemäß zu verwendende Abdichtungsmasse Verarbeitungszeiten von 30 Minuten bis zu zwei Stunden auf.

Die erfindungsgemäß zu verwendende Abdichtungsmasse zur Herstellung der Abdichtungsschicht I und/oder III kann durch Vermengen der verschiedenen Komponenten in den jeweils angegebenen Anteilen hergestellt werden. Die Formulierung der Abdichtungsmasse für die erfindungsgemäße Verwendung erfolgt typischerweise so, dass gebrauchsfertige 2-Komponentensysteme entstehen. Dazu werden typischerweise die Komponenten A) und B) in einem geeigneten Mischaggregat, vorzugsweise einem Dissolver, vorgelegt und mit verschiedenen Bestandteilen der Komponente D) innig vermischt. Der Zusatz der Komponente C) erfolgt unmittelbar vor der Verarbeitung, wobei die Komponente C) der Mischung aus den Komponenten A), B) und D) zugemischt wird. Gegebenfalls können Bestandteile der Komponente D) auch der Komponente C) beigemischt werden. In der Abdichtungsmasse für die erfindungsgemäße Verwendung liegen im Allgemeinen pro Epoxidgruppe der Komponenten A) und B) 0,4 bis 0,9, vorzugsweise 0,5 bis 0,8 primäre Aminogruppen der Komponente C) vor.

Die so zubereitete Abdichtungsmasse zur Herstellung der Abdichtungsschicht I
und/oder III kann dann einschichtig oder vorzugsweise mehrschichtig auf das zu beschichtende Substrat aufgebracht werden. Das zu beschichtende Substrat kann jedes gegenüber Feuchtigkeit zu schützende Substrat sein. Üblicherweise handelt es sich bei dem Substrat um Holz, Beton, Stahl, Kunststoff, Bitumen, etc. die in dem Dach oder der Wand enthalten sind.

Es hat sich als äußerst vorteilhaft herausgestellt, dass die erfindungsgemäß zu verwendende Abdichtungsmasse überraschenderweise eine sehr gute Haftung zu den Substraten, beispielsweise Beton, einerseits und zu sich selbst andererseits aufweist. Somit ist eine Grundierung des Substrates, beispielsweise Beton, vor dem Auftrag der erfindungsgemäß zu verwendenden Abdichtungsmasse nicht notwendig. Die erfindungsgemäß zu verwendende Abdichtungsmasse kann (ohne Zentrifugation) sogar auf frischen hochalkalischen Beton bzw. auf restfeuchten Beton aufgebracht werden.

Wie bereits vorstehend ausgeführt, weist die erfindungsgemäß zu verwendende Abdichtungsmasse auch eine gute Haftung zu sich selbst auf. Mithin ist es
möglich, mehrere Schichten der erfindungsgemäß zu verwendenden Abdichtungsmasse übereinander aufzubringen, wobei zwischen den verschiedenen Aufbringungsvorgängen die jeweils zuvor aufgebrachte Abdichtungsmasse bereits angehärtet oder ausgehärtet sein kann.

Diese Eigenschaft ist von großem Vorteil, da bei großflächigen Substraten, beispielsweise Gebäudewänden oder Dachflächen, die Beschichtung ggf. nicht in einem Zuge aufgebracht werden kann, sondern über mehrere Tage verteilt aufgebracht werden muss. Dies stellt aufgrund der guten Haftung der erfindungsgemäß zu verwendenden Abdichtungsmasse zu sich selbst kein Problem dar, so dass auch in den Anschlussbereichen eine lückenlose Abdichtung erfolgt, wobei die nachfolgend aufgetragene Abdichtungsmasse nach Aushärtung zum einen zuverlässig an dem Untergrund, beispielsweise Beton, als auch an der bereits aufgebrachten und ausgehärteten Abdichtungsmasse anhaftet.

Weiterhin ist vorteilhaft, dass nach Aufbringung der erfindungsgemäßen Abdichtungsmasse auch Fehlstellen überbrückt und Rauigkeiten im Untergrund nivelliert werden.

Wenn die Rauigkeit auf dem zu isolierenden Substrat, beispielsweise einem Dach oder einer Wand, vorliegt, kann im Hinblick auf die nivellierende Wirkung der Abdichtungsmasse die nachfolgend aufzubringende Wärmedämmschicht vorteilhafterweise vollflächig verklebt werden, was im Hinblick auf die Wärmedämmung und die mechanische Stabilität des Verbundsystems von großem Vorteil ist.

Wenn die Rauigkeit bei der Wärmedämmschicht vorliegt bzw. zwischen nebeneinander angeordneten Wärmedämmplatten Stoßfugen ausgebildet sind, werden diese Unebenheiten bzw. kleine Stufen ebenfalls durch die aufgebrachte Abdichtungsmasse nivelliert, so dass die Abdichtungsschicht III bzw. Außenabdichtung vollflächig mit der Wärmedämmschicht verklebt ist.

Die erfindungsgemäß zu verwendende Abdichtungsmasse ermöglicht mithin eine zuverlässige Abdichtung jedes Untergrundes oder Substrates gegenüber Wasserdampf und Feuchtigkeit.

Im Hinblick auf die große Wasserdampf-Diffusionswiderstandszahl µ der erfindungsgemäß zu verwendenden Abdichtungsmasse reichen bereits geringe Schichtdicken im Millimeterbereich aus, um eine zuverlässig wirkende Wasserdampf-Sperrschicht zu erzeugen.

Überraschenderweise werden auch bei diesen geringeren Schichtdicken mechanisch stabile Beschichtungen erhalten, so dass die Abdichtungsschicht III bzw. Außenabdichtung ebenfalls nur über eine geringe Schichtdicke verfügen muss.

So ist eine Schichtdicke bei der Abdichtungsschicht I und/oder III in einem Bereich von 1 bis 5 mm, vorzugsweise von 2 bis 4 mm, weiter bevorzugt von 2,5 bis 3 mm, ausreichend, um eine zuverlässige wasserdampfsperrende Wirkung bzw. eine zuverlässige mechanische Stabilität zu erzeugen.

Gemäß einer erfindungsgemäßen Weiterbildung enthält die Abdichtungsschicht I bzw. Wasserdampfsperrschicht und/oder Abdichtungsschicht III bzw. Außenabdichtung kein Vlies, Gewebe und/oder Gewirke.

Das erfindungsgemäße Verbundsystem weist überraschenderweise hervorragende mechanische Eigenschaften auf, die ein Begehen bzw. auch punktuelles Belasten des Verbundsystems erlauben, ohne dass dieses hierdurch beschädigt wird. Somit kann auf das aufwendige Einarbeiten bzw. Einbringen eines Verstärkungsmaterials, beispielsweise von Fasern in Form von Vlies, Gewebe und/oder Gewirke verzichtet werden, ohne eine Qualitätseinbuße hinnehmen zu müssen.

Gemäß einer bevorzugten Variante des erfindungsgemäßen Verbundsystems weist die Abdichtungsschicht III bzw. die Außenabdichtung ein Verstärkungsmaterial, vorzugsweise in Form von Fasern als Vlies, Gewebe, Geflecht und/oder Gewirke, auf. Ein solches Verstärkungsmaterial ist insbesondere dann in der Abdichtungsschicht III bzw. der Außenabdichtung enthalten, wenn das gegen-Feuchtigkeit und Wärmeverluste zu schützende Bauteil, beispielsweise ein Flachdach, bei regelmäßigem Gebrauch außerordentlich stark mechanisch belastet werden soll, beispielsweise wenn das Flachdach als Dachterrasse genutzt werden soll.

Selbstverständlich ist es aber auch möglich, nach Aushärtung der verwendeten Abdichtungsmasse, d. h. nach Ausbildung der Abdichtungsschicht I bzw. Wasserdampfsperrschicht, eine Verklebung des Wärmedämmmaterials mit der ausgebildeten Wasserdampfsperrschicht in einem zweiten Arbeitsgang durchzuführen. Zur Verklebung kann entweder erneut die erfindungsgemäß zu verwendende Abdichtungsmasse aufgebracht oder aber auch eine andere geeignete Klebe- oder Haftmasse verwendet werden.

Gemäß einer weiteren bevorzugten Variante des erfindungsgemäßen Verbundsystemes enthält die Abdichtungsschicht I und/oder III unabhängig voneinander einen Säure-Base Indikator bzw. pH-Wert-Indikator.

Die Verwendung eines pH-Wert-Indikators in der Abdichtungsschicht I und/oder III erlaubt vorteilhafterweise das Auffinden von Undichtigkeiten in der Abdichtungsschicht I und/oder III.

Das Auffinden von Undichtigkeiten in einer Abdichtung gegenüber Feuchtigkeit ist in der Regel ein sehr aufwendig. Es wurde nunmehr überraschenderweise gefunden, dass das Auffinden derartiger Undichtigkeiten sehr erleichtert werden kann, wenn in der Abdichtungsschicht I und/oder III pH-Wert-Indikatoren enthalten sind.

Die pH-Wert-Indikatoren können aber auch in einer separaten Schicht, die zwischen der Abdichtungsschicht I und III angeordnet ist, enthalten sein. Diese separate Schicht kann zur Verstärkung auch ein Vlies, Gewebe und/oder Gewirke enthalten. Selbstverständlich können die pH-Wert-Indikatoren und die Verstärkungselemente Vlies, Gewebe und/oder Gewirke auch in separaten Schichten vorliegen.

Das Regenwasser weist aufgrund der Umweltverschmutzung heutzutage in industrialisierten Regionen einen pH-Wert im saueren Bereich auf. Durch eine mechanische Beschädigung der Abdichtungsschicht I und/oder III wird der in der jeweiligen Abdichtungsschicht enthaltene pH-Wert-Indikator gegenüber dem sauren Regenwasser exponiert, wodurch bei dem pH-Wert-Indikator nachweisbare Eigenschaften geändert werden.

Beispielsweise können Farbänderungen auftreten, wenn die eingetretene Flüssigkeit von neutral in sauer übergeht. Der Farbumschlag kann ohne weiteres mit dem Auge erkannt werden.

Als pH-Wert-Indikatoren werden vorzugsweise solche verwendet, bei denen es zu einer Eigenschaftsänderung kommt, wenn der pH-Wert auf pH 6 oder darunter fällt.

Das Regenwasser in Industrieregionen und Städten weist heutzutage einen pH-Wert im Bereich von pH 4, 5 bis 6 auf.

Der Säure-Base-Indikator bzw. pH-Wert-Indikator kann beispielsweise aus der
Gruppe, die aus Alizarinsulfonsäure-Natriumsalz, Methylrot, Carminsäure, Chlorphenolrot, 2-Nitrophenol, Lackmus, Hämatoxylin, Bromkresolpurpur, Bromphenolrot, 4-Nitrophenol, Bromxylenblau, Alizarin, Bromthymolblau, Phenolrot, 3-Nitrophenol und Mischungen davon besteht, ausgewählt werden.

Vorzugsweise können auch Feuchtigkeitsindikatoren in Form eines oder mehrerer Metallsalze, einschließlich von Metalloxiden, deren Farbumschlag vollständig im Umschlagsbereich von pH 4 bis 6,5 liegt, verwendet werden.

Es können aber auch spektroskopisch nachweisbare Eigenschaften, vorzugsweise Lumineszenzeigenschaften, des pH-Wert-Indikators durch das saure Regenwasser geändert werden.

Gemäß einer bevorzugten Variante kommt es durch Exposition gegenüber dem sauren Regenwasser bei dem pH-Wert-Indikator zu einen Änderung der UV-Fluoreszenzeigenschaften. Eine Änderung der UV-Fluoreszenzeigenschaften kann mittels einer UV-Lampe ohne weiteres nachgewiesen werden. Eine solche Untersuchung kann beispielsweise bei Abdunkelung oder bei Nacht durchgeführt werden, so dass die Änderung der UV-Fluoreszenz bereits mit dem Auge erkannt werden kann. Selbstverständlich kann die Änderung der UV-Fluoreszenzeigenschaften mit einem Detektor nachgewiesen werden.

Gemäß einer bevorzugten Ausführungsform der Erfindung ist bei dem Verbundsystem auf der der Wärmedämmschicht II abgewandten Seite der Abdichtungsschicht I auf dem Substrat eine Grundierungsschicht angeordnet.

Eine Grundierung kann vorteilhaft sein, um die Haftung der Abdichtungsschicht I bzw. der Wasserdampfsperrschicht an dem abzudichtenden Gebäudeteil zu erhöhen. Die Grundierung kann dabei als Haftbrücke wirken. Wenn die Abdichtungsmasse auch als Grundierungsmasse verwendet wird, wird vorzugsweise eine möglichst niedrige Viskosität und ein hohes Penetrationsvermögen, beispielsweise durch Verminderung des Anteils an Füllstoffen, eingestellt. Eine Grundierung kann sich bei Substraten aus Beton als vorteilhaft erweisen.

Gemäß einer weiteren Variante der Erfindung ist bei dem Verbundsystem auf der der Wärmedämmschicht II zugewandten Seite der Abdichtungsschicht I eine Haftschicht angeordnet.

Die Haftschicht kann dabei, wie vorstehend beschrieben, materialidentisch zur Wasserdampfsperrschicht sein.

Vorzugsweise sind bei dem erfindungsgemäßen Verbundsystem die Abdichtungsschicht I, die Wärmedämmschicht II und die Abdichtungsschicht III unmittelbar aufeinander folgend angeordnet. Bei dieser bevorzugten Ausführungsform ergibt sich mithin ein symmetrischer Schichtenaufbau, bei dem die Wärmedämmschicht ober- und unterseitig jeweils mit einer materialidentischen Abdichtungsschicht versehen ist.

Gemäß einer weiteren bevorzugten Ausführungsform sind bei dem erfindungsgemäßen Verbundsystem die Abdichtungsschicht I, eine Haftschicht, die Wärmedämmschicht II und die Abdichtungsschicht III unmittelbar aufeinander folgend angeordnet.

Gemäß einer noch weiteren bevorzugten Ausführungsform sind bei dem erfindungsgemäßen Verbundsystem eine Grundierungsschicht, die Abdichtungsschicht I, eine Haftschicht, die Wärmedämmschicht II und die Abdichtungsschicht III unmittelbar aufeinander folgend angeordnet.

Die der Erfindung zugrunde liegende Aufgabe wird ferner durch ein Flächengebilde gelöst, wobei das Flächengebilde ein Verbundsystem gemäß einem der Ansprüche 1 bis 21 aufweist. Das Flächengebilde ist gemäß einer bevorzugten Weiterbildung der Erfindung ein Gebäudeelement, vorzugsweise eine Decke, eine Wand oder ein Dach, insbesondere ein Flachdach oder Pultdach.

Die Gebäudeelemente können bereits mit einem erfindungsgemäßen Verbundsystem versehen sein.

Auf der Abdichtungsschicht III des erfindungsgemäßen Verbundsystems können weitere Schichten, beispielsweise eine oder mehrere farbgebende Oberflächenbeschichtung(en) aufgebracht werden. Es ist selbstverständlich auch möglich, auf der Abdichtungsschicht III des erfindungsgemäßen Verbundsystems eine Kiesschüttung, Holz- oder Steinplatten, eine Begrünung, beispielsweise eine Grasschicht, etc. aufzubringen.

Diese Flächengebilde eignen sich hervorragend für die Verwendung bei Fertighaus-Herstellern, bei denen die einzelnen Gebäudeelemente vorgefertigt und nachfolgend innerhalb kurzer Zeit an Ort und Stelle zusammengebaut werden.

Die der Erfindung zugrunde liegende Aufgabe wird auch durch Bereitstellung eines Verfahrens gelöst, wobei das Verfahren folgende Schritte umfasst:
(a) Bereitstellen einer flüssigen Abdichtungsmasse mit folgenden Komponenten:
   A) mindestens ein epoxidfunktionelles Polysulfidharz,
   B) mindestens ein Epoxidharz,
   C) mindestens einen Härter, welcher bei Umgebungstemperatur reaktiv gegenüber Epoxidgruppen ist,
   D) Füllstoffe, Hilfs- und/oder Zusatzmittel
   wobei der Anteil an epoxidfunktionellem Polysulfid-Harz A) in einem Bereich von 25 - 80 Masse-%, bezogen auf die Gesamtmasse der flüssigen Abdichtungsmasse, liegt,
(b) Aufbringen der Abdichtungsmasse auf ein Substrat unter Ausbildung der Abdichtungsschicht I,
(c) Aufbringen einer Wärmedämmschicht II auf die Abdichtungsschicht I oder auf eine auf der Abdichtungsschicht I optional angeordneten Zwischenschicht,
(d) Aufbringen der Abdichtungsmasse auf die Wärmedämmschicht II oder auf eine auf der Wärmedämmschicht II optional angeordneten Zwischenschicht unter Ausbildung der Abdichtungsschicht III.

Zur Vermeidung von Wiederholungen wird in Bezug auf die Beschreibung der zu verwendenden Materialien auf die Ausführungen zu dem Verbundsystem entsprechend verwiesen.

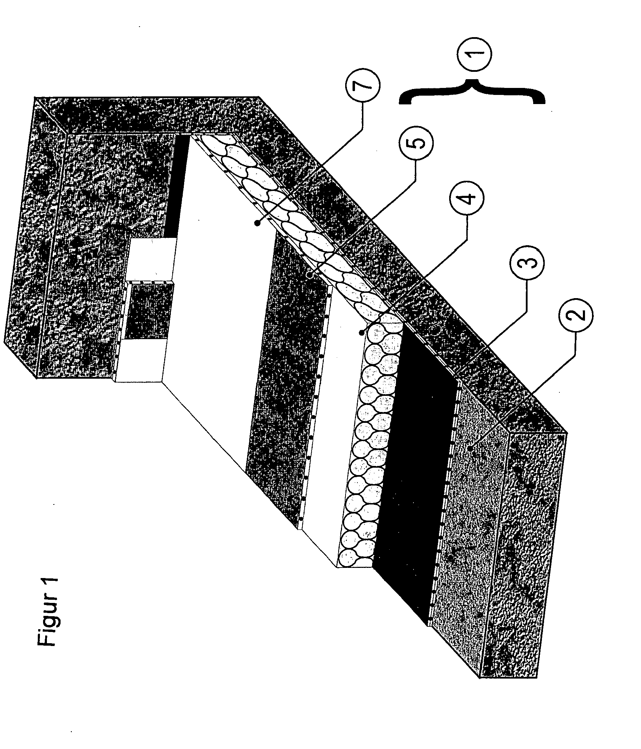

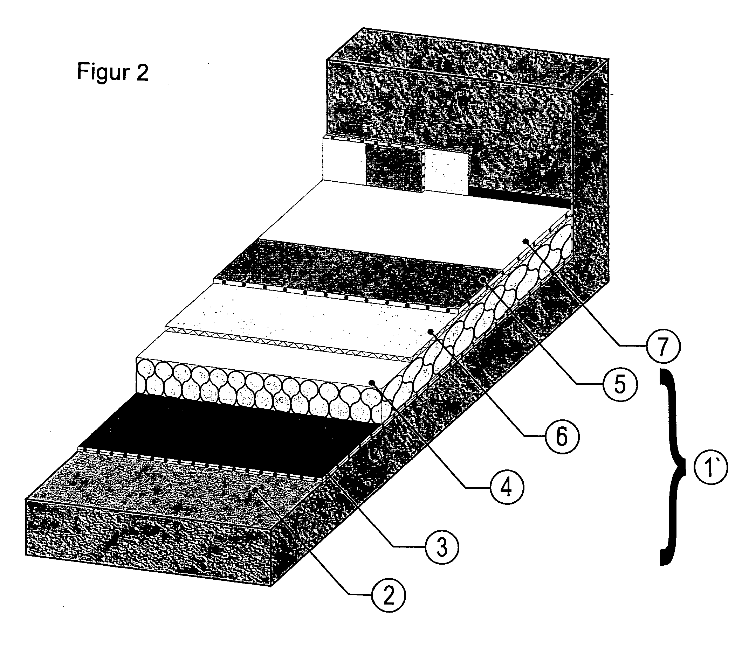

Die Erfindung wird nachfolgend anhand der beigefügten Figuren 1 und 2 und von Beispielen näher erläutert, ohne diese hierdurch in irgendeiner Form zu beschränken.

In Fig. 1 ist der Aufbau eines erfindungsgemäßen Verbundsystems dargestellt.

In Fig.2 ist der Aufbau eines weiteren erfindungsgemäßen Verbundsystems dargestellt.

### Figur 1:

Das Verbundsystem 1 umfasst eine Wasserdampfsperrschicht 3 (Abdichtungsschicht I), eine Wärmedämmschicht 4 (Wärmedämmschicht II) und eine Außenabdichtung 5 (Abdichtungsschicht III) und ist auf einer Betondecke 2 angeordnet.

In der Außenabdichtung 5 kann optional zusätzlich eine Verstärkung, beispielsweise in Form eines Vlieses, Gewebes oder Gewirkes, und/oder pH-Wert-Indikator(en) enthalten sein. Optional kann über oder auf der Außenabdichtung 5 eine farbgebende Oberflächenschicht 7 aufgebracht sein.

### Figur 2:

Diese Ausführungsform entspricht der Ausführungsform von Fig. 1, wobei das Verbundsystem 1' eine Zwischenschicht 6 zwischen der Wärmedämmschicht 4 (Wärmedämmschicht II) und der Außenabdichtung 5 (Abdichtungsschicht III) aufweist. Diese optionale Zwischenschicht 6 kann beispielsweise eine Verstärkung beispielsweise in Form eines Vlieses, Gewebes und/oder Gewirkes, und/oder pH-Wert-Indikator(en) enthalten. Auf dem Verbundsystem 1' kann des weiteren optional eine farbgebende Oberflächenschicht 7 angeordnet sein.

### Beispiel 1 (erfindungsgemäß)

Herstellung einer 2-Komponenten-Reaktionsharzmasse (Abdichtungsmasse) zur Aufbringung als Abdichtungsschicht I und III:

**Ein 2-Komponenten-Beschichtungssystem wurde formuliert enthaltend als Komponente 1:**

| | |
|---|---|
| 400 g | EPS 70, aromatisches epoxidfunktionelles Polysulfidharz der Fa. Thioplast Chemicals GmbH & Co. KG, Greiz, Deutschland mit einem Epoxidäquivalentgewicht von 310 und einem Gehalt an unmodifiziertem Epoxidharz von 28 %. |
| 200 g | EPS 25, aliphatisches epoxidfunktionelles Polysulfidharz der Fa. Thioplast Chemicals GmbH & Co. KG, Greiz, Deutschland mit einem Epoxidäquivalentgewicht von 640 ohne Anteile von unmodifiziertem Epoxidharz |
| 44 g | Polypox R24 (C12-C14 Glycidether der Fa. UPPC AG (Mietringen-Baltringen, Deutschland) mit einem Epoxidäquivalentgewicht von 290 |
| 86 g | Titandioxid-Weisspigment |
| 84 g | Talkum, Microtalk AT 1 |
| 60 g | Martinal ON 310 (Aluminiumhydroxid der Fa. Martinswerk GmbH, Bergheim, Deutschland) |
| 120 g | Martinal ON 320 (Aluminiumhydroxid der Fa. Martinswerk GmbH, Bergheim, Deutschland) |
| 3 g | Kieselsäure Cab-O-Sil TS 720 (Fa. Cabot GmbH, Hanau, Deutschland) |
| 5 g | Disparlon 6500 (Dispergierhilfsmittel der Fa. Erbslöh KG, Krefeld, Deutschland) |
| 5 g | Entschäumer Byk A 501 (Byk-Chemie, Wesel, Deutschland) |

Die Mischung der Epoxidharze wurde in einem handelsüblichen Dissolver vorgelegt und sukzessive mit den weiteren Komponenten innig vermischt.

Zur Aushärtung wurden als Komponente 2 195 g Aradur 2963 (handelsüblicher Epoxidharzhärter auf Basis aliphatischer Amine der Fa. Huntsman LLC, Belgien) der Komponente 1 zugesetzt. Nach inniger Vermischung erhielt man eine gebrauchsfertige 2-Komponenten-Reaktionsharzmasse mit einer Verarbeitungszeit von ca. 40 Minuten.

Die wasserdampfdiffusionsäquivalente Luftschichtdicke s_{d}, ermittelt an 2,00 +/-5% mm dicken Platten gemäß DIN EN 1931 betrug 64 m entsprechend einer Wasserdampf Diffusionswiderstandszahl µ von 32000.

Die Herstellung und Eigenschaften des Verbundsystemes sind in Beispiel 5 beschrieben.

### Beispiel 2 (erfindungsgemäß)

Herstellung einer 2-Komponenten-Reaktionsharzmasse (Abdichtungsmasse) zur Aufbringung als Abdichtungsschicht I und III:

**Ein 2-Komponenten-Beschichtungssystem wurde formuliert enthaltend:**

| | |
|---|---|
| 40 g | EPS 25, aliphatisches epoxidfunktionelles Polysulfidharz der Fa. Thioplast Chemicals GmbH & Co. KG, Greiz, Deutschland mit einem Epoxidäquivalentgewicht von 640 ohne Anteil von unmodifiziertem Epoxidharz |
| 165 g | EPS 600, aromatisches epoxidfunktionelles Polysulfidharz der Fa. Thioplast Chemicals GmbH & Co. KG, Greiz, Deutschland mit einem Epoxidäquivalentgewicht von 185 und einem Gehalt an unmodifiziertem Epoxidharz von 35 %. |
| 20 g | Epilox A19-00, Standard Epoxidharz der Fa. Leuna Harze GmbH (Leuna, Deutschland)mit einem Epoxidäquivalentgewicht von 190 |
| 5 g | Polypox R24 (C12-C14 Glycidether der Fa. UPPC AG , Mietringen-Baltringen, Deutschland) mit einem Epoxidäquivalentgewicht von 290 |
| 86 g | Titandioxid-Weisspigment |
| 45 g | Talkum, Microtalk AT 1 |
| 55 g | Martinal ON 310 (Aluminiumhydroxid der Fa. Martinswerk GmbH, Bergheim, Deutschland) |
| 10 g | Martinal ON 320 (Aluminiumhydroxid der Fa. Martinswerk GmbH, Bergheim, Deutschland) |
| 1 g | Kieselsäure Cab-O-Sil TS 720 (Fa. Cabot GmbH, Hanau, Deutschland) |
| 2 g | Ricinusöl |
| 1 g | Entschäumer Byk A 501 (Byk-Chemie, Wesel, Deutschland) |

Die Mischung der Epoxidharze wurde in einem handelsüblichen Dissolver vorgelegt und sukzessive mit den weiteren Komponenten innig vermischt.

Zur Aushärtung wurden 67 g Aradur 450 BD (handelsüblicher Epoxidharzhärter auf Polyamidoamin-Basis der Fa. Huntsman LLC, Belgien) zugesetzt. Nach inniger Vermischung erhielt man eine gebrauchsfertige 2-Komponenten-Reaktionsharzmasse mit einer Verarbeitungszeit von ca. 50 Minuten.

Die wasserdampfdiffusionsäquivalente Luftschichtdicke s_{d}, ermittelt an 2,00 +/-5% mm dicken Platten gemäß DIN EN 1931 betrug 105 m entsprechend einer Wasserdampf Diffusionswiderstandszahl µ von 52500.

Die Herstellung und Eigenschaften des Verbundsystems sind in Beispiel 5 beschrieben.

### Beispiel 3 (Vergleichsbeispiel)

Herstellung einer 2-Komponenten Reaktionsharzmasse auf Basis von Epoxidharzen (Abdichtungsmasse) zur Aufbringung als Abdichtungsschicht I und III:

Ein Beschichtungssystem auf Basis eines flexiblen Epoxidharzes wurde ohne Zusatz epoxidfunktioneller Polysulfidharze formuliert enthaltend:

| | |
|---|---|
| 500 g | Polypox 492 (inert elastifiziertes Epoxidharz der Fa. UPPC AG (Mietringen-Baltringen, Deutschland) mit einem Epoxidäquivalentgewicht von 313 |
| 100 g | Polypox 403 (reaktivverdünntes, monofunktionelles Epoxidharz der Fa. UPPC AG (Mietringen-Baltringen, Deutschland) mit einem Epoxidäquivalentgewicht von 193 |
| 69 g | Titandioxid-Weißpigment |
| 18 g | Eisenoxid-Schwarzpigment |
| 106 g | Schwerspat EWO |
| 60 g | Martinal ON 310 (Aluminiumhydroxyd der Fa. Martinswerk, Bergheim, Deutschland) |
| 120 g | Martinal ON 320 (Aluminiumhydroxyd der Fa. Martinswerk, Bergheim, Deutschland) |
| 30 g | Kieselsäure Cab-O-Sil TS 720 (Fa. Cabot GmbH Hanau Deutschland) |
| 23 g | Disparlon 6500 (Dispergierhilfsmittel der Fa. Erbslöh KG, Krefeld, Deutschland) |
| 30 g | Entschäumer Byk A 501 (Byk-Chemie, Wesel, Deutschland) |

Das Epoxidharz wurde in einem handelsüblichen Dissolver vorgelegt und sukzessive mit den weiteren Komponenten innig vermischt.

Zur Aushärtung wurden 258 g cycloaliphatischer Polyaminhärter der Fa. UPPC AG (Mietringen-Baltringen, Deutschland) mit einem H-aktiv-Äquivalentgewicht von 120) zugesetzt. Nach inniger Vermischung erhielt man eine gebrauchsfertige 2-Komponenten-Reaktionsharzmasse.

Die wasserdampfdiffusionsäquivalente Luftschichtdicke s_{d}, ermittelt an 2,00 +/-5% mm dicken Platten gemäß DIN EN 1931 betrug 5,1 m, entsprechend einer Wasserdampf Diffusionswiderstandszahl µ von 2550.

Die Herstellung und Eigenschaften des Verbundsystems sind in Beispiel 5 beschrieben.

### Beispiel 4 (Vergleichsbeispiel)

Herstellung einer 2-Komponenten Reaktionsharzmasse auf Basis von modifizierten Polyurethanen gemäß US-Patentanmeldung 2003/0192283 (Abdichtungsmasse) zur Aufbringung als Abdichtungsschicht I und III:
Es wurde eine 2-Komponenten Reaktionsharzmasse auf Basis aromatischer
Polyurethane gemäß US-Patentanmeldung 2003/0192283 A1 Beispiel 1 hergestellt.

Die wasserdampfdiffusionsäquivalente Luftschichtdicke s_{d}, ermittelt an 2,00 +/-5% mm dicken Platten gemäß DIN EN 1931 beträgt 7,0 m entsprechend einer Wasserdampf Diffusionswiderstandszahl µ von 3500.

Die Herstellung und Eigenschaften des Verbundsystems sind in Beispiel 5 + 6 beschrieben.

### Beispiel 5: Herstellung von freien Filmen

Für die Ermittlung der Materialkennwerte wurden von den Abdichtungsmassen gemäß den erfindungsgemäßen Beispielen 1 und 2 sowie den Vergleichsbeispielen 3 und 4 freie Filme in einer Größe von 200 mm x 100 mm in einer Schichtdicke von 2,00 mm +/- 5% hergestellt.

Zur Ermittlung von Alterungseinflüssen -wurden die jeweiligen Filme jeweils 60 Tage gegenüber Heißluft (80°C), entmineralisiertem Wasser (bei 80°C) oder einer künstlichen Bewitterung für 1000 h im Xenon Test ausgesetzt. Die Prüfungen in der Heißluft, im Heißwasser sowie im Xenontest (künstliche Bewitterung) erfolgten jeweils gemäß ETAG 005 (ETAG: European Technical Approval Guidelines der European Organisation for Technical Approvals (EOTA)).
Die Ergebnisse (Mittelwerte nach künstlicher Bewitterung (Xenontest)) sind in der nachstehenden Tabelle I zusammengefasst.

| **Prüfergebnisse** | Einheit | Bsp. 1 (Erf.) | Bsp. 2 (Erf.) | Bsp. 3 (Vgl.) | Bsp. 4 (Vgl.) |
|---|---|---|---|---|---|
| Zugfestigkeit | N/mm² | 6,1 | 4,9 | 7,91 | 8,1 |
| Bruchdehnung | % | 86 | 110 | 41 | 76 |
| Rissüberbrückung* | mm | 2/-20°C | 2/-20°C | 1/-10°C | 0/-10°C |
| Statischer Eindruck* | N | P 4 | P 3 | P 3 | P 4 |
| Dynamischer Eindruck* | m WS | L 4 | L 4 | L 4 | L 4 |
| Änderung der Shore A Härte | % | +8 | +12 | +14 | +21 |
| Kältebruchfestigkeit | °C | - 25 | - 25 | - 10 | - 10 |
| Wasserdampfdifussionswiderstand | µ | 32000 | 52500 | 2550 | 3500 |

| | | | | | |
|---|---|---|---|---|---|
| * Prüfungen und Einstufung nach ETAG 005 P = statische Belastung gemäß ETAG 005 L = dynamische Belastung gemäß ETAG 005 | | | | | |

### Beispiel 6: Herstellung des Verbundsystems

Die in den erfindungsgemäßen Beispielen 1 und 2 sowie den Vergleichsbeispielen 3 und 4 hergestellten Abdichtungsmassen wurden in einer Schichtdicke von 2,00

mm +/- 5% auf eine Betonplatte mit einer Größe von 1.000 mm x 500 mm als Wasserdampfsperrschicht (Abdichtungsschicht I) aufgetragen. Auf die noch nicht ausgehärtete Abdichtungsmasse wurden Wärmedämmplatten aus Polystyrol bzw.

Polyurethan mit einem Raumgewicht von 20 kg/m³ mit einer Schichtdicken von 120 mm aufgelegt, so dass die Wärmedämmschicht vollflächig und kraftschlüssig mit der Betonplatte verklebt war. Nachfolgend wurde auf die Wärmedämmschicht erneut die jeweilige Abdichtungsmasse als Außenabdichtung (Abdichtungsschicht III) mit einer Schichtdicke von 2,00 mm +/- 5% aufgetragen. Nach Aushärtung bei 23°C über 24 h wurden die unter Verwendung der Abdichtungsmassen gemäß

den erfindungsgemäßen Beispielen 1 und 2 sowie den Vergleichsbeispielen 3 und 4 hergestellten Verbundsysteme wie folgt untersucht:

**Die Ergebnisse sind in der nachstehenden Tabelle II zusammengefasst.**

| **Prüfergebnisse** | Einheit | Bsp. 1 (Erf.) | Bsp. 2 (Erf.) | Bsp. 3 (Vgl.) | Bsp. 3 (Vgl.) |
|---|---|---|---|---|---|
| Haftzugsfestigkeit auf Beton | N/mm² | 2,50** | 2,50** | 1,80*** | 1,60** |
| Haftzugsfestigkeit auf PUR | N/mm² | 0,18** | 0,18** | 0,18** | 0,18** |
| Haftzugsfestigkeit auf EPS | N/mm² | 0,15** | 0,15** | 0,15** | 0,15** |
| Statischer Eindruck* | N | P 4 | P 3 | - | - |
| Dynamischer Eindruck* | m WS | L 4 | L 4 | - | - |
| | | | | | |

| | | | | | |
|---|---|---|---|---|---|
| * Prüfungen und Einstufung nach ETAG 005 ** Adhäsionsbruch *** Kohäsionsbruch P = statische Belastung gemäß ETAG 005 L = dynamische Belastung gemäß ETAG 005 | | | | | |

Die wasserdampfdiffusionsäquivalente Luftschichtdicke berechnet sich aus der materialspezifischen Wasserdampf-Diffusionswiderstandszahl µ multipliziert mit der Dicke d in [m] der Wasserdampfsperrschicht.

Ab einem µ-Wert von größer als 15000 kann bei Applikation in Schichtdicken von 2-4 mm eine ausreichende Wasserdampfsperrschicht erhalten werden. Die gemäß den Beispielen 3 und 4 (Vergleichsbeispiele) hergestellten
Beschichtungen wiesen, wie in Tabelle1 zusammengestellt ist, eine absolut ungenügende Wasserdampfdiffusionswiderstandszahl µ von weniger als 15000 auf.

## Patentansprüche

**1.** Verbundsystem mit wenigstens drei Schichten,
**dadurch gekennzeichnet,**
**dass** das Verbundsystem eine Wärmedämmschicht II mit einer Oberseite und einer Unterseite aufweist, wobei oberseitig zur Wärmedämmschicht II wenigstens eine Abdichtungsschicht III und unterseitig zur Wärmedämmschicht II wenigstens eine Abdichtungsschicht I angeordnet ist und die Abdichtungsschicht I und III jeweils eine ausgehärtete Abdichtungsmasse umfassen, wobei die Abdichtungsmasse folgende Komponenten enthält:
A) mindestens ein epoxidfunktionelles Polysulfidharz,
B) mindestens ein Epoxidharz,
C) mindestens einen Härter, welcher bei Umgebungstemperatur reaktiv gegenüber Epoxidgruppen ist,
D) Füllstoffe, Hilfs- und/oder Zusatzmittel wobei der Anteil an epoxidfunktionellem Polysulfid-Harz A) in einem Bereich von 25 - 80 Masse-%, bezogen auf die Gesamtmasse der Abdichtungsmasse, liegt.

**2.** Verbundsystem gemäß Anspruch 1,
**dadurch gekennzeichnet,**
**dass** das epoxidfunktionelle Polysulfidharz A) ein aliphatisches und/oder aromatisches epoxidfunktionelles Polysulfidharz ist.

**3.** Verbundsystem nach Anspruch 1 oder 2,
**dadurch gekennzeichnet,**
**dass** die Abdichtungsmasse als Komponente B) wenigstens ein aromatisches Epoxidharz enthält.

**4.** Verbundsystem gemäß einem der vorhergehenden Ansprüche,
**dadurch gekennzeichnet,**
**dass** der Anteil an epoxidfunktionellem Polysulfidharz A) in einem Bereich von 30 bis 75 Masse-%, vorzugsweise von 35 bis 60 Masse-%, jeweils bezogen auf die Gesamtmasse der Abdichtungsmasse, liegt.

**5.** Verbundsystem gemäß einem der vorhergehenden Ansprüche,
**dadurch gekennzeichnet,**
**dass** der Anteil an Epoxidharz B) in einem Bereich von 5 bis 30 Masse-%, bevorzugt von 8 bis 25 Masse-%, weiter vorzugsweise von 10 bis 20 Masse-%, jeweils bezogen auf die Gesamtmasse der Abdichtungsmasse, liegt.

**6.** Verbundsystem gemäß einem der vorhergehenden Ansprüche,
**dadurch gekennzeichnet,**
**dass** die Abdichtungsmasse als Komponente D) Füllstoffe sowie optional weitere Additive in einem Bereich von 10 bis 50 Masse-%, bezogen auf die Gesamtmasse der Abdichtungsmasse enthält

**7.** Verbundsystem gemäß einem der vorhergehenden Ansprüche,
**dadurch gekennzeichnet,**
**dass** das Molekulargewicht des epoxidfunktionellen Polysulfidharzes A) in einem Bereich von 150 bis 1000 g/mol, vorzugsweise von 200 bis 800 g/mol, weiter vorzugsweise von 300 bis 600 g/mol, liegt.

**8.** Verbundsystem gemäß einem der vorhergehenden Ansprüche,
**dadurch gekennzeichnet,**
**dass** das Molekulargewicht des Epoxidharzes B) in einem Bereich von 150 bis 1000 g/mol, vorzugsweise von 200 bis 700 g/mol, weiter vorzugsweise von 300 bis 500 g/mol, liegt.

**9.** Verbundsystem gemäß einem der vorhergehenden Ansprüche,
**dadurch gekennzeichnet,**
**dass** die Abdichtungsmasse weniger als 10 Masse-%, vorzugsweise weniger als 5 Masse-%, weiter bevorzugt weniger als 1 Masse-%, organisches Lösungsmittel, jeweils bezogen auf die Gesamtmasse der Abdichtungsmasse, enthält.

**10.** Verbundsystem gemäß einem der vorhergehenden Ansprüche,
**dadurch gekennzeichnet,**
**dass** die noch nicht ausgehärtete Abdichtungsmasse in einem Temperaturenbereich von 10 bis 30°C gießfähig oder fließfähig ist.

**12.** Verbundsystem gemäß einem der vorhergehenden Ansprüche,
**dadurch gekennzeichnet,**
**dass** die noch nicht ausgehärtete Abdichtungsmasse bei einer Temperatur von 23°C eine rotationsviskosimetrisch bestimmbare Viskosität im Bereich von 2.000 mPas bis 25.000 mPas, vorzugsweise von 3.000 mPas bis 20.000 mPas, weiter vorzugsweise von 5.000 mPas bis 15.000 mPas, aufweist.

**13.** Verbundsystem gemäß einem der vorhergehenden Ansprüche,
**dadurch gekennzeichnet,**
**dass** die Abdichtungsmasse nach Aushärtung eine Wasserdampf-Diffusionswiderstandszahl µ von wenigstens 15000 aufweist.

**14.** Verbundsystem
**dadurch gekennzeichnet,**
**dass** die Dicke der Abdichtungsschichten I und III jeweils unabhängig voneinander in einem Bereich von 1 bis 5 mm, vorzugsweise von 2 bis 4 mm, weiter bevorzugt von 2,5 bis 3 mm, liegen.

**15.** Verbundsystem gemäß einem der vorhergehenden Ansprüche,
**dadurch gekennzeichnet,**
**dass** die Abdichtungsschicht I und/oder III unabhängig voneinander ein Vlies, Gewebe und/oder Gewirke enthalten.

**16.** Verbundsystem gemäß einem der vorhergehenden Ansprüche,
**dadurch gekennzeichnet,**
**dass** die Abdichtungsschicht I und/oder III unabhängig voneinander ein pH-Wert-Indikator enthalten.

**17.** Verbundsystem gemäß einem der vorhergehenden Ansprüche,
**dadurch gekennzeichnet,**
**dass** auf der der Wärmedämmschicht II abgewandten Seite der Abdichtungsschicht I eine Grundierungsschicht angeordnet ist.

**18.** Verbundsystem gemäß einem der vorhergehenden Ansprüche,
**dadurch gekennzeichnet,**
**dass** auf der der Wärmedämmschicht II zugewandten Seite der Abdichtungsschicht I eine Haftschicht angeordnet ist.

**19.** Verbundsystem gemäß einem der vorhergehenden Ansprüche,
**dadurch gekennzeichnet,**
**dass** die Abdichtungsschicht I, die Wärmedämmschicht II und die Abdichtungsschicht III unmittelbar aufeinanderfolgend angeordnet sind.

**20.** Verbundsystem gemäß einem der Ansprüche 1 bis 18,
**dadurch gekennzeichnet,**
**dass** die Abdichtungsschicht I, eine Haftschicht, die Wärmedämmschicht II und die Abdichtungsschicht III unmittelbar aufeinanderfolgend angeordnet sind.

**21.** Verbundsystem gemäß einem der Ansprüche 1 bis 18,
**dadurch gekennzeichnet,**
**dass** eine Grundierungsschicht, die Abdichtungsschicht I, eine Haftschicht, die Wärmedämmschicht II und die Abdichtungsschicht III unmittelbar aufeinanderfolgend angeordnet sind.

**22.** Flächengebilde,
**dadurch gekennzeichnet,**
**dass** das Flächengebilde ein Verbundsystem gemäß einem der vorherigen Ansprüche aufweist.

**23.** Flächengebilde gemäß Anspruch 22,
**dadurch gekennzeichnet,**
**dass** das Flächengebilde ein Gebäudeelement, vorzugsweise eine Decke, eine Wand oder ein Dach, insbesondere ein Flachdach, ist.

**24.** Verfahren zur Herstellung eines Verbundsystemes gemäß einem der Ansprüche 1 bis 21,
**dadurch gekennzeichnet,**
**dass** das Verfahren folgende Schritte umfasst:
(a) Bereitstellen einer flüssigen Abdichtungsmasse mit folgenden Komponenten:
A) mindestens ein epoxidfunktionelles Polysulfidharz,
B) mindestens ein Epoxydharz,
C) mindestens einen Härter, welcher bei Umgebungstemperatur reaktiv gegenüber Epoxydgruppen ist,
D) Füllstoffe, Hilfs- und/oder Zusatzmittel
wobei der Anteil an epoxidfunktionellem Polysulfid-Harz A) in einem Bereich von 25 - 80 Masse-%, bezogen auf die Gesamtmasse der flüssigen Abdichtungsmasse, liegt,
(b) Aufbringen der Abdichtungsmasse auf ein Substrat unter Ausbildung der Abdichtungsschicht I,
(c) Aufbringen einer Wärmedämmschicht II auf die Abdichtungsschicht I oder auf eine auf der Abdichtungsschicht I optional angeordneten Zwischenschicht,
(d) Aufbringen der Abdichtungsmasse auf die Wärmedämmschicht II oder auf eine auf der Wärmedämmschicht II optional angeordneten Zwischenschicht unter Ausbildung der Abdichtungsschicht III.
